# EUROPEAN PATENT APPLICATION

(11) **EP 2 163 828 A2**
(43) Date of publication of application: **17.03.2010**
(21) Application number: 09251388.6
(22) Date of filing: 22.05.2009
(51) Int. Cl.: F24D 3/18, F24J 3/08, F28D 15/00

(54) **Appartus and method for transferrign energy**

(30) Priority: 23.05.2008 GB 0809448
(71) Applicant: GeoGen Systems Limited, Trafford Park Manchester M17 1GB (GB)
(72) Inventor: Love, Andrew, Manchester M29 8SA (GB); Love, Matthew, Manchester M28 2PU (GB)
(74) Representative: Wilson Gunn

(57) **Abstract**

Energy transfer apparatus (1) comprising a fluid connection to a water supply network (10) enabling water to be drawn from and returned to the supply network (10). The apparatus (1) further comprises a heat exchanger (12) enabling heat to be absorbed from or rejected to water drawn from the supply network (10), thereby enabling the water supply network (10) to be used as a heat source or sink. The water supply network (10) may be underground and the fluid connection may comprise an inlet (4) and an outlet (6). The energy transfer apparatus (1) may be used to supply thermal energy to or take thermal energy from a location (13) such as commercial or domestic premises.

## Description

The present invention relates to an apparatus and method for transferring energy using the water supplied to a location from a water supply network. The location can be domestic and/or commercial premises or any other location which is served by a water supply network.

Ground source energy, which is generated and replenished by the sun, is a reliable source of renewable energy stored within the first 100m or so of the Earth's surface. This ground source energy represents a largely untapped and potentially useful thermal energy source for domestic and commercial premises. It also represents a potential heat sink into which heat may be dumped. Its ability to act as both a heat source and a heat sink makes the ground a useful resource for heating and cooling a domestic or commercial property.

Conventionally, thermal energy is transferred to and from the ground by laying an extensive, horizontally oriented closed loop of polyethylene pipework under the footprint of a premises using digging equipment. Alternatively, where space is tight, vertical loops may be installed in the ground using a boring drill or other means. Fluid, usually antifreeze and water, is circulated under pressure through the closed loop of pipework, which is sealed, in order to absorb thermal energy from the ground. Since the fluid used is at a lower temperature than the surrounding ground it absorbs thermal energy from the ground as it progresses through the loop of pipework. The low grade heat captured during this process is then transferred to a heat pump where it is used to heat a refrigerant, which is then compressed, generating further heat.

By exploiting the ability of the refrigerant to boil from a liquid to a vapour and then condense back into a liquid, it is possible to achieve heating and cooling of a location using the same system. However, this type of system can be very expensive and difficult to implement in areas where there is restricted access to the ground proximate to the location to which it is desired to provide access to ground source energy. In such circumstances it can be difficult to drill the holes or dig the trenches, or carry out other groundwork necessary to allow for the laying of such pipework. An object of the invention is to mitigate these difficulties.

According to a first aspect of the present invention there is provided an energy transfer apparatus comprising a fluid connection to a water supply network enabling water to be drawn from and returned to the supply network, and a heat exchanger enabling heat to be absorbed from or rejected to water drawn from the supply network, thereby enabling the water supply network to be used as a heat source or sink.

A water supply network is generally connected to commercial or domestic property-in order to supply the property with clean running water. The pipes of the network are typically buried to a depth of 1.5 to 2.5 metres beneath the ground surface to ensure that the water flowing through the network does not freeze or overheat. Thus, the roughly constant temperature of the water flowing through a water supply network is typically 10°C to 12°C. Advantageously, a water supply network provides an existing heat source and heat sink which obviates the need to lay an expensive expanse of pipework. Water from the water supply network can therefore be used to effectively transfer thermal energy to or from a location via a heat exchanger. Using an existing water supply network as a heat source and heat sink is therefore far more cost effective than having to dig and bury the extensive pipework of a conventional system in the ground, or well drilling.

Preferably the water supply network is underground. The apparatus may comprise an inlet and an outlet. Preferably, the outlet is downstream of the inlet. Preferably, to assist the flow of water into the inlet from the water supply network, the water supply network comprises a restriction between the inlet and outlet. The restriction may take the form of shaped projections integrally formed or attached to the inner surface of a pipe of the supply network to generate a pressure drop in the region between the inlet and the outlet, causing water to flow into the inlet. As an alternative to the restriction, the apparatus may comprise a pump which is operative to encourage the flow of water from the water supply network. A pump could also be used in addition to the restrictor to encourage the flow of water from the water supply network.

In a preferred embodiment, the heat exchanger is connected to the inlet by an inlet pipe and the outlet by a return pipe. Preferably one or more water outlets is connected to the return pipe, for example, a tap. A non-return valve may be associated with the return pipe which is operative to restrict water from flowing into the return pipe from the water supply network when one or more water outlet is activated. Thus, when one or more water outlet is activated, water is preferentially drawn from the inlet to promote the continued flow of water through the heat exchanger.

In a preferred embodiment the apparatus further comprises a heat pump associated with the heat exchanger. Most preferably, the apparatus is arranged to transfer energy to or from a location.

According to a second aspect of the present invention there is provided a method of energy transfer comprising the steps of:
drawing water from a water supply network;
absorbing energy from or rejecting energy to the water via a heat exchanger; and
returning the water to the water supply network.

In a preferred embodiment, the fluid connection comprises an inlet and an outlet and the method comprises the additional step of arranging the inlet and outlet such that the outlet is downstream of the inlet. Preferably, the method comprises the additional step of restricting the flow of water through the water supply network between the inlet and the outlet.

Preferably, the method comprises the step of connecting the inlet and the outlet to the heat exchanger by one or more pipes. The method may comprise the additional step of associating a heat pump with the heat exchanger and using the heat pump to move heat from a heat source to a heat sink.

In a preferred embodiment, the method comprises the step of transferring energy to or from a location via the heat exchanger.

The invention will now be described, by way of example, with reference to the accompanying drawings in which:
Fig. 1 shows a schematic representation of an apparatus according to the present invention; and
Fig. 2 shows a schematic example of one form of a restrictor device for use in the water supply network.

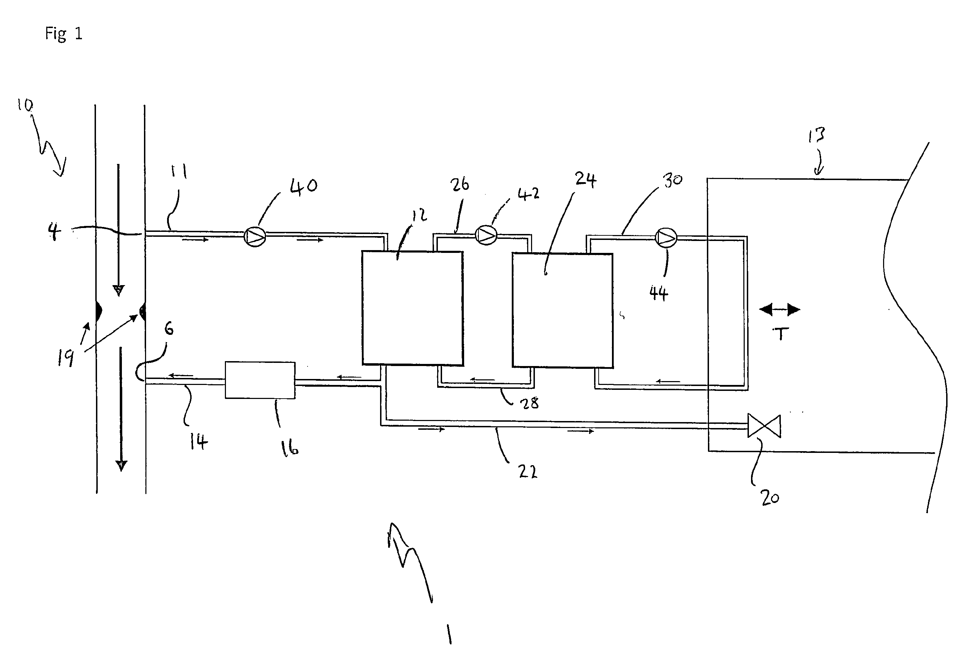

Referring to Fig. 1, there is shown an energy transfer apparatus 1 connected to a pipe section 10 of a water supply network which may be used to supply clean, flowing potable water to a location 13 such as commercial or residential premises. The water supply network is typically provided in any area or location where potable water is required, for example, in residential or commercial districts where housing or other buildings are present. The apparatus 1 comprises an inlet 4 and an outlet 6 which serve to draw water from and return water to the mains supply pipe 10. Both the inlet 4 and outlet 6 are connected to a heat exchanger 12 via plastic pipes 11, 14, thereby permitting water from the mains supply pipe 10 to flow through the heat exchanger 12 and return to the water supply pipe 10.

A water outlet 20 in the form of a tap is located within the location 13 and is connected to the return pipe 14 by a further pipe section 22. The water outlet could alternatively be a toilet, sink or other outlet for drawing water from the water supply network within the location 13. The tap 20 can therefore be used to draw water from the mains supply pipe 10 via the inlet pipe 11 and the heat exchanger 12. A non-return valve 16 is associated with the return pipe 14 and is operative to restrict water from being drawn from the mains supply pipe 10 via the return pipe 14. Thus, when the tap 20 is activated water is preferentially drawn from the mains supply pipe 10 via the inlet pipe 11 and heat exchanger 12, rather than the return pipe 14, thereby promoting the continued flow of water through the heat exchanger 12.

The apparatus 1 further comprises a heat pump 24 which is connected to the heat exchanger 12 via a circuit of pipes 26, 28. The connection pipes 26, 28 are isolated from the inlet pipe 11 and the return pipe 14 so as to prevent contamination of the water flowing through the water supply network. A thermal transfer medium in the form of a fluid flows through the connection pipes 26, 28 to permit thermal energy to be transferred from the water of the water supply pipe 10 via the heat exchanger 12 to the heat pump 24 or vice versa.

The heat pump 24 is of conventional design and, by exploiting the ability of a refrigerant to boil from a liquid to a vapour and then condense back into a liquid, is able to utilise the low grade thermal energy in the water from the mains supply pipe 10 to create higher grade thermal energy which may be used for heating the location 13. This higher grade thermal energy is transferred to the location 13 by a second circuit of pipes 30 which is isolated from the first circuit 26, 28 and which also has fluid, acting as an energy transfer medium, flowing through it. The high grade thermal energy created by the heat pump 24 may be used to provide mains hot water for domestic or commercial use or to provide space heating.

Additionally, the heat pump 24 comprises a reversing valve which enables the flow of refrigerant and, thus, the heat cycle of the heat pump 24 to be reversed. By reversing the heat cycle of the heat pump 24, it is possible to transfer thermal energy from the location 13 to the heat pump via the second pipe circuit 30. The heat pump 24 utilises the low grade thermal energy from the location 13 to create higher grade thermal energy which is then transferred to the heat exchanger 12 by the fluid flowing through the first pipe circuit 26, 28. The heat exchanger 12 enables thermal energy from the location 13 and subsequently the heat pump 24 to be transferred to the mains supply pipe 10 via the return pipe 14. Therefore, depending upon the direction of flow of refrigerant through the heat pump 24, it is possible to transfer thermal energy to or from the location 13, as indicated by the arrow labelled T in Fig. 1, thereby enabling the apparatus 1 to cool or heat the location 13 as desired. As a result, the water supply network may act as an effective heat sink or source.

To encourage the flow of water from the water supply network, a low rated water pump 40 is connected to the inlet pipe 11 which assists in the flow of water through the heat exchanger 12, return pipe 14 or tap 20. It will be understood that the low rated water pump 40, heat exchanger 12 and heat pump 24 may be provided as a single unit rather than as separate entities as shown in Fig. 1. Similar water pumps 42, 44 are also connected to the first pipe circuit 26, 28 and the second pipe circuit 30, respectively, to circulate the fluid within the pipes and, thus, transfer thermal energy to or from the heat pump 24 from or to the location 13 or heat exchanger 12 as the case may be.

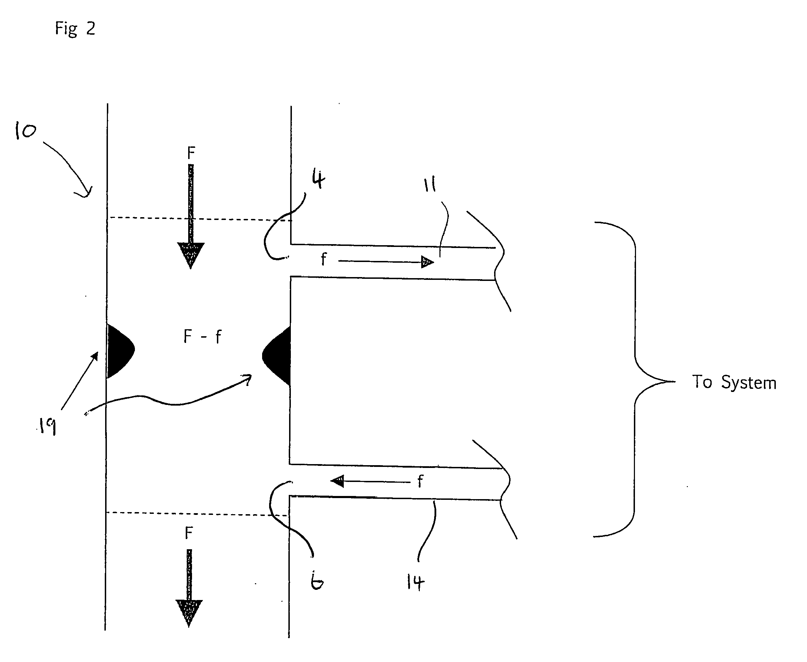

Referring to Figs 1 and 2, in order to facilitate the entry of water from the mains supply pipe 10 into the inlet pipe 11, there is provided a flow restriction 19 which extends into the mains supply pipe 10 from the internal pipe walls. This restriction 19 takes the form of a projection around the circumference of the internal pipe wall which extends into the pipe. The restriction is located between the inlet pipe 11 and return pipe 14, downstream of and in close proximity to the inlet 11. Since the restriction serves to reduce the cross sectional area of the mains supply pipe 10, the velocity of water passing through the restriction is increased which gives rise to a pressure gradient between the inlet 11 and the outlet 14. Owing to the pressure gradient, water flows into the inlet pipe 11 of the apparatus so that the water can be used to transfer thermal energy to and from the location 13. It will of course be appreciated that the restriction 19 could comprise one or more separate projections that extend into the pipe from the internal pipe walls around the circumference of the pipe.

In use, the inlet pipe 11 and return pipe 14 are connected to the mains supply pipe 10 and arranged such that the return pipe 14 is downstream of the inlet pipe 11. Ideally the apparatus 1 should be connected to a new mains supply pipe 10 of a water supply network, prior to being laid, to simplify installation. However, the apparatus 1 can be retrofit to an existing mains supply pipe 10 via the inlet 11 and return 14 pipes after it has been laid. The mains supply pipe 10 should preferably have existing connections for the inlet pipe 11 and return pipe 14 for ease of installation. If such connections exist, the apparatus 1 can be easily connected to the mains supply pipe 10 by a plumber.

Once the apparatus 1 is connected to a mains supply pipe 10, some of the water from the mains supply pipe 10 is drawn by the apparatus via the inlet pipe 11. The water drawn by the apparatus 1 is channelled to and flows through the heat exchanger 12 where thermal energy is either absorbed from or rejected to the water.

If thermal energy is absorbed from the water, it is transferred, via the heat exchanger 12, to the heat transfer medium flowing through the first pipe circuit 26, 28. The heat transfer medium, which flows from the heat exchanger 12 to the heat pump 24 and back again, transfers the absorbed low grade thermal energy to the heat pump 24 where it is 'concentrated' in the conventional manner. This concentrated or higher grade thermal energy is then transferred to the location 13, via the heat transfer medium flowing through the second pipe circuit 30, where it is used to provide space heating or mains hot water.

If it is desired to cool the location 13 instead of heat it, the heat pump's 24 heat cycle is reversed by activating the reversing valve to reverse the flow of refrigerant through the heat pump 24. That is, with this direction of flow, the second pipe circuit 30 acts as the cool evaporator part of the heat pump 24 and the first pipe circuit 26, 28 acts as the hot condenser part of the heat pump 24. The result is that low grade thermal energy is transferred, via the second circuit 30, from the location 13 to the heat pump 24 where it is concentrated and transferred, via the first pipe circuit 26, 28, to the heat exchanger 12. The thermal energy is then rejected into the water flowing through the heat exchanger 12 and returned to the mains water pipe 10 via the return pipe 14. In so doing, thermal energy is extracted from the location 13 and dumped into the water of the water supply network by the apparatus 1, thereby cooling the location 13.

In each case therefore water is drawn from and returned to the mains supply pipe 10 by the apparatus 1 permitting the water supply network to be used as a heat source or sink as desired. Given the volume of water flowing through the water supply network and the large specific heat capacity of water, the apparatus 1 alters the net temperature of the water by only a small amount. When the water is returned to the supply network by the apparatus 1 the roughly constant ground temperature restores the temperature of the returned water to its normal level of 10°C to 12°C.

It will of course be realised that to take water out of a system at an arbitrary temperature, and to return the water at a slightly altered temperature having generated a useful amount of thermal energy from such a water supply is an efficient process. In addition, such an apparatus and method of transferring energy, which uses water from a water supply network, is a renewable and sustainable heat source or sink. This allows for a reduction of a location's carbon footprint and is therefore less damaging to the environment.

So far as the restriction 19 is concerned, this may be used in apparatus and methods not necessarily related to the present invention. Such a restriction may be used to cause a drop in pressure of the fluid flowing within a mains supply pipe 10 to encourage water to flow to a location 13 supplied by the water network regardless of whether or not the apparatus 1 is connected to the water supply network.

Thus, it can be seen that utilising the apparatus and method of the present invention is a simple and cost effective way to provide heat or other energy, or cooling to a location 13. Such apparatus does not suffer from the significant installation procedures of conventional systems such as the drilling of extremely deep boreholes and other groundwork and the associated problems which occur as a result of the need for such activities.

It is also intended that the design, construction and selection of materials for this invention shall take into account such means so as will eliminate the possibility of contamination of the water supply, for example, the selection of food grade additives, or the elimination of the requirement for these additives via design parameters.

It is of course to be understood that the above embodiment has been described by way of example only and that many variations are possible without departing from the scope of the invention.

## Claims

1. Energy transfer apparatus (1) comprising a fluid connection to a water supply network (10) enabling water to be drawn from and returned to the supply network (10), and a heat exchanger (12) enabling heat to be absorbed from or rejected to water drawn from the supply network (10), thereby enabling the water supply network (10) to be used as a heat source or sink.

2. Apparatus as claimed in claim 1, wherein the water supply network (10) is underground.

3. Apparatus as claimed in claim 1 or 2, wherein the fluid connection comprises an inlet (4) and an outlet (6).

4. Apparatus as claimed in claim 3 or 4, wherein the outlet (6) is downstream of the inlet (4).

5. Apparatus as claimed in claim 4, wherein the water supply network (10) comprises a restriction (19) between the inlet (4) and outlet (6).

6. Apparatus as claimed in any of claims 3 to 5, wherein the heat exchanger (12) is connected to the inlet (4) by an inlet pipe (11) and the outlet (6) by a return pipe (14).

7. Apparatus as claimed in any preceding claim, further comprising a heat pump (24).

8. Apparatus as claimed in any preceding claim, wherein one or more water outlets (20) is connected to the return pipe (14).

9. Apparatus as claimed in any preceding claim, wherein the apparatus (1) is arranged to transfer energy to or from a location (13).

10. A method of energy transfer comprising the steps of:
drawing water from a water supply network (10);
absorbing or rejecting energy to the water via a heat exchanger (12); and
returning the water to the water supply network (10).

11. The method of claim 10, wherein the fluid connection comprises an inlet (4) and an outlet (6) and the method comprises the additional step of arranging the inlet (4) and outlet (6) such that the outlet (6) is downstream of the inlet (4).

12. The method of claim 11, comprising the additional step of restricting the flow of water through the water supply network (10) between the inlet (4) and the outlet (6).

13. The method of claim 11 or 12, comprising the step of connecting the inlet (4) and the outlet (6) to the heat exchanger (12) by one or more pipes (11, 14).

14. The method of any of claims 10 to 13, comprising the step of associating a heat pump (24) with the heat exchanger (12) and using the heat pump (24) to move heat from a heat source to a heat sink.

15. The method of any of claims 9 to 14, comprising the step of transferring energy to or from a location (13) via the heat exchanger (12).
